# EUROPÄISCHE PATENTANMELDUNG

(11) **EP 2 224 128 A2**
(43) Veröffentlichungstag der Anmeldung: **01.09.2010**
(21) Anmeldenummer: 10001980.1
(22) Anmeldetag: 26.02.2010
(51) Int. Cl.: F03D 7/02

(54) **Windkraftanlage mit einem Bremssystem**

(30) Priorität: 27.02.2009 DE 102009010671
(71) Anmelder: Schwieger, Hartwig, 29227 Celle (DE); Wichmann, Torsten, 29364 Langlingen (DE); Piper, Erik John William, 31311 Uetze (DE)
(72) Erfinder: Schwieger, Anette, 29227 Celle (DE)
(74) Vertreter: Brümmerstedt, Hans Dietrich

(57) **Zusammenfassung**

Die Erfindung betrifft eine Windkraftarilage mit einem Mast und einer mittels eines Schwenklagers (3) im Mast (2) schwenkbar gelagerten Gondel, in der ein Rotor (4) drehbar gelagert ist, dessen Rotorwelle (6) über ein Getriebe (10) mit einer horizontalen Welle (12) zum Antrieb eines in der Gondel drehbar gelagerten Verbrauchers und/oder mit einer vertikalen Welle (15) zum Antrieb eines in einem Mastfuß oder in einem Mastunterbau gelagerten Verbrauchers in Wirkverbindung steht, und mit einem Bremssystem (18), das mit der Rotorwelle (6) und/oder der horizontalen und/oder der vertikalen Welle (12, 15) in Wirkverbindung steht. Das Bremssystem (18) weist eine auf der Rotorwelle (6) und/oder der vertikalen und/oder der horizontalen Welle (12, 15) montierte Bremsscheibe (20) und einen quer zur Bremsscheibe beweglichen, die Bremsscheibe übergreifenden Bremssattel (22) auf, in dem beidseitig der Bremsscheibe (20) quer zur Bremsscheibe bewegliche Bremsbelagsträger mit Bremsbelägen (34, 36) und ein einseitig der Bremsscheibe angeordnetes, pneumatisch oder hydraulisch betätigbares, quer zur Bremsscheibe bewegliches Schubmittel (28) angeordnet ist, das in Bremsstellung, in der die Bremsbeläge an der Bremsscheibe anliegen, von einem Spannmittel (30) beaufschlagt ist und entgegen der Spannkraft zum Lösen der Bremse von einem Pneumatik- oder Hydraulik-Aktuator (32) beaufschlagbar ist.

## Beschreibung

Die Erfindung betrifft eine Windkraftanlage mit einem Bremssystem gemäß Oberbegriff des Anspruchs 1.

Es ist wesentlich, dass Windkraftarilagen bei zu hohen Windgeschwindigkeiten und im Falle einer Störung wichtiger Komponenten automatisch angehalten werden können. Auch wenn bspw. der Generator überhitzt oder vom elektrischen Netz abgetrennt ist, wird der Rotor in seiner Drehbewegung nicht mehr ausreichend belastet und gebremst. Er wird dann beschleunigen und die zulässige Drehzahl überschreiten. In diesen Situationen ist es wichtig, einen zuverlässigen Drehzahlüberschreitungsschutz zu haben.

Das Hauptbremssystem bei modernen Windkraftanlagen, insbesondere größerer Bauform, ist das aerodynamische Bremssystem. Hier wird der Strömungsabriss bei hohen Windgeschwindigkeiten und/oder das Verstellen des Rotorblatt-Anstellwinkels genutzt, um eine Überdrehzahl des Rotors zu vermeiden. Ein mechanisches Bremssystem wird zusätzlich eingesetzt und dient als Notfallsystem und als Feststellbremse. Es wird bei Sicherheits- und Notabschaltungen, manuellem Stopp, Wartung und Reparatur in der Gondel aktiviert. Ein mechanisches Bremssystem kann aber durchaus auch zum Drehzahlüberschreitungsschutz eingesetzt werden, insbesondere bei Anlagen kleinerer Größe, die in der Regel keine (motorische) Verstellmöglichkeit des Rotorblatt-Anstellwinkels besitzen.

Die Aufgabe der vorliegenden Erfindung besteht darin, eine Windkraftanlage mit einem insbesondere für Anlagen kleinerer Baugröße auch ohne Rotorblattverstellung geeigneten Bremssystem zu versehen, welches leicht, kompakt, preiswert herstellbar und leicht montierbar ist und den Rotor automatisch bei zu starkem Wind oder Schäden zuverlässig und sicher stoppt.

Diese Aufgabe wird durch die Windkraftanlage mit den Merkmalen des Anspruchs 1 gelöst.

Vorteilhafte und zweckmäßige Weiterbildungen der Aufgabenlösung sind in den Unteransprüchen angegeben.

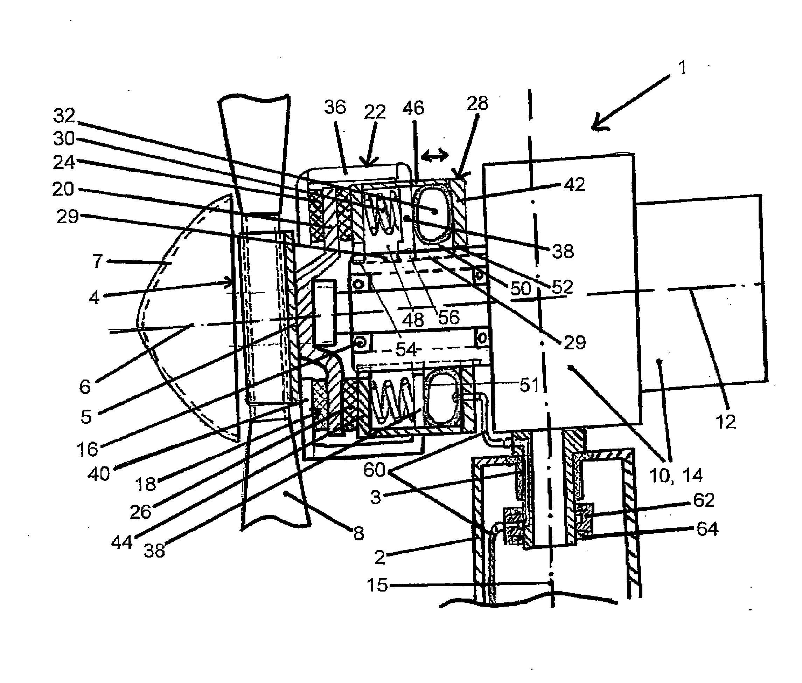

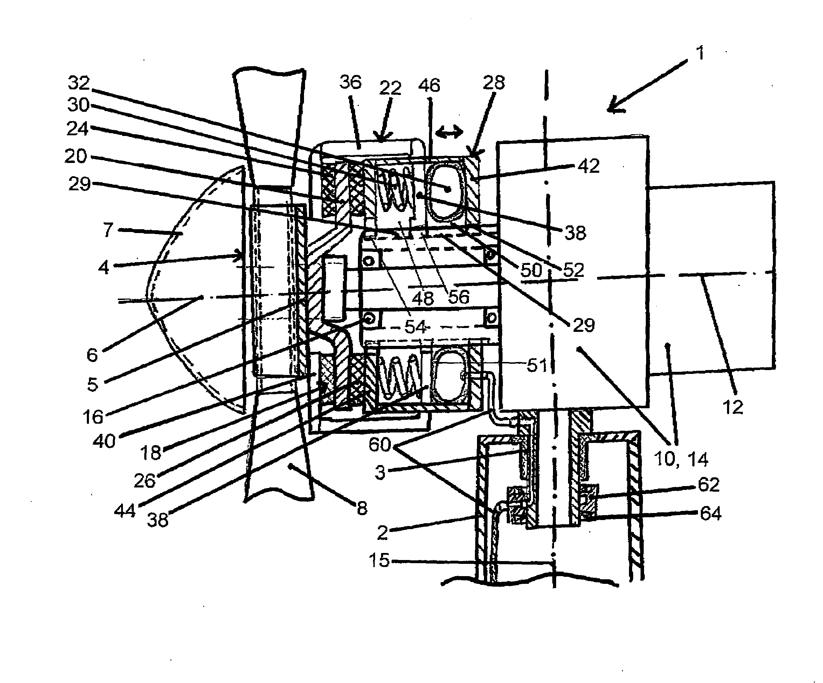

Die Erfindung soll nachfolgend anhand der beigefügten Zeichnung näher erläutert werden.

Die Zeichnung zeigt schematisch einen Teil einer Windkraftanlage 1 mit einem rohrförmigen, vorzugsweise z. B. für Wartungsarbeiten kippbar ausgebildeten Mast 2, von dem nur der obere Teil dargestellt ist. Auf dem Mast 2 ist eine Gondel (Maschinenkopf, nicht explizit dargestellt) mittels eines Schwenklagers 3 schwenkbar gelagert. In der Gondel befindet sich ein Rotor 4, mit Rotorlagerung 16, mit Rotorflansch 5, mit horizontaler Rotorwelle 6, mit Nabe 7 und Rotorblättern 8.

Die Rotorwelle 6 steht z.B. über ein Getriebe 10 mit einer horizontalen Welle 12 zum Antrieb eines in der Gondel drehbar gelagerten Verbrauchers 14, bspw. eines Generators und/oder eines Kompressors, und/oder mit einer vertikalen Welle 15 zum Antrieb eines in einem Mastfuß (nicht dargestellt) oder in einem Mastunterbau (nicht dargestellt) gelagerten Verbrauchers (Getriebe und/oder Generator und/oder Kompressor) in Wirkverbindung. Das Getriebe ist bei einem Abtrieb nach unten (vertikale Welle)vorzugsweise ein Winkelgetriebe und bei einem Abtrieb nach hinten (horizontale Welle) ein Planetenradgetriebe, gegebenenfalls ein Stirnradgetriebe, wobei ein Generator dann hinter dem Getriebe, bei einem Planetengetriebe koaxial angeordnet ist. Anstatt über ein Getriebe kann der Generator auch direkt vom Rotor angetrieben werden. Alternativ oder zusätzlich können Kompressoren einer Wärmepumpe angetrieben werden, wobei bei zusätzlicher Verwendung eine zusätzliche Abtriebswelle vorgesehen ist, bspw, in Form eines Getriebes mit doppeltem Wellenausgang.

Der Rotor 4 ist in einer Rotorlagerung 16 drehbar gelagert, die in der Regel aus einem oder mehreren Wälzlagern und einem oder mehreren Lagergehäusen besteht.

Die Windkraftanlage 1 ist mit einem Bremssystem 18 ausgerüstet, das eine auf der Rotorwelle 6 und/oder der vertikalen und/oder der horizontalen Welle 15, 12 montierte Bremsscheibe 20 und eine erste quer zur Bremsscheibe 20 bewegliche Baugruppe aufweist, die ein die Bremsscheibe übergreifendes Gehäuse, den sogenannten Bremssattel 22 aufweist.

Beidseitig der Bremsscheibe 20 sind quer zur Bremsscheibe bewegliche Bremsbeläge 24, 26 z. B. auf Bremsbelagsträgem (nicht dargestellt) angeordnet. Auf einer Seite der Bremsscheibe (20) befindet sich eine pneumatisch oder hydraulisch betätigbare, quer zur Bremsscheibe 20 bewegliche zweite Baugruppe 28, nachfolgend als Schubmittel bezeichnet. In Bremsstellung werden die Bremsbeläge (24, 26) an die Bremsscheibe 20, von einem Spannmittel 30 mit einer Spannkraft angedrückt. Zum Lösen der Bremse ist ein Pneumatik- oder Hydraulik-Aktuator 32 vorgesehen, der bei Beaufschlagung mit Druck eine entgegen der Spannkraft wirksame Kraft aufbaut.

Der Bremssattel 22 und das Schubmittel 28 sind zur Abstützung des Bremsmomentes in Umfangsrichtung formschlüssig mit der Rotorlagerung 16 oder anderen tragenden Komponenten in der Gondel verbunden, wobei eine axial zur Bremsscheibe 20 ausführbare Beweglichkeit der beiden Baugruppen zum Ausgleich der Stellbewegungen und des Bremsenverschleißes z.B. in einer Nut oder einem Schlitz oder entlang einer Verzahnung gewährleistet ist.

Der Aktuator 32 stützt sich zwischen einem rotorabgewandten und vom Spannmittel 30 beaufschlagten Teil des Bremssattels 22 und wenigstens einem Teil des Schubmittels 28 ab.

Der Bremssattel 22 wird vorzugsweise durch zwei ringförmige, axial beabstandete, die entsprechende Welle umschließende, vorzugsweise mittels eines Laserschnitts aus Stahlblech hergestellte, plattenförmige Strukturelemente 38, 40 gebildet, die am äußeren Umfang durch Verbindungsmittel wie Schrauben, Distanzstücke oder Bleche miteinander verbunden sind.

Das Schubmittel 28 hat die Funktion, den Aktuator 32 aufzunehmen und dessen Kraft in den Bremssattel 22 bzw. zum Spannmittel 30 zu leiten. Es besteht vorzugsweise aus zwei ring- oder plattenförmigen, axial beabstandeten Strukturelementen 42, 44 aus z.B. lasergeschnittenem Stahlblech, von denen ein Strukturelement 44 innerhalb des Bremssattels 22 angeordnet ist. Die beiden ringförmigen Strukturelemente 42, 44 des Schubmittels 28 sind miteinander durch geeignete, durch entsprechende Aussparungen im Strukturelement 34 des Bremssattels 22 hindurchgeführte Verbindungsmittel wie Schrauben, Distanzstücke oder Bleche, verbunden.

Das Spannmittel 30 ist vorzugsweise innerhalb des Bremssattels 22 angeordnet und stützt sich dabei zwischen dem Strukturelement 38 des Bremssattels 22 und dem Strukturelement 44 des Schubmittels 28 ab.

Der Aktuator 32 ist vorzugsweise innerhalb des Schubmittels 28 angeordnet und stützt sich zwischen einem Strukturelement 38 des Bremssattels 22 und einem Strukturelement 42 des Schubmittels 28 ab.

Der oben erwähnte Formschluss 29 ist zwischen den Strukturelementen 38, 42, 44, und dem Rotorlager 16 bzw. anderen tragenden Teilen ausgebildet.

Das oder die Vorspannmittel 30 werden durch ein Federpaket gebildet, welches aus einzelnen, ringförmig um das Rotorlager 16 herum angeordneten Schraubendruckfedern oder aus einer um das Rotorlager 16 herum gewundenen Schraubendruckfeder oder aus einer um das Rotorlager 16 herum angeordneten Tellerfeder besteht.

Der Aktuator 32 besteht aus einem, mittels eines druckbeaufschlagten Fluids, vorzugsweise Luft, betätigbaren Element, das erfindungsgemäß ringförmig um die Rotorlagerung 16 bzw. die entsprechende Welle 6, 12, 15, an der das Bremssystem 18 wirksam ist, angeordnet ist.

Der Aktuator 32 ist dabei vorzugsweise als elastisches, dehnbares, um das Rotorlager 16 herum im ringförmigen Raum 50 angeordnetes Bauteil 51 ausgeführt, das vorzugsweise durch einen Schlauch oder einen Reifen mit Schlauch oder einen schlauchlosen, sich auf einer entsprechenden Felge selbst abdichtenden Reifen gebildet ist, in den pneumatisches oder hydraulisches Druckmittel einspeisbar ist.

Bei der Beaufschlagung des Aktuators 32 mit dem Druckmittel dehnt sich der Schlauch elastisch aus unter Ausübung einer vorzugsweise in axialer Richtung wirksamen Spreizkraft auf das Strukturelement 42 wodurch der Bremssattel 22 und das Schubmittel 28 unter Zusammendrücken des Spannmittels 30 relativ zueinander verschoben werden und die Bremsbeläge 24, 26 aus der den Rotor 4 abbremsenden Position an der Bremsscheibe 20 gelöst werden.

Der bevorzugte Schlauch ist dauerhaft dicht ausführbar und fügt sich ideal in den ringförmigen Bauraum 50 um die Rotorlagerung 16 herum ein. Er kann besonders in axialer Richtung bereits mit geringem pneumatischem Druck große Kräfte zur Entspannung des stark wirksamen Spannmittels 30 aufbauen, da er den verfügbaren ringförmigen Querschnitt um die zu bremsende Welle großflächig ausfüllt. Die bevorzugte Pressluft ist betriebssicher, leicht und günstig verfügbar und einfach bis zum Bremssystem 18 zu leiten; somit prädestiniert für den Einsatz an kleineren Windkraftanlagen.

Alternativ ist eine Variante mit einer Gruppe von ringförmig angeordneten einzelnen Pneumatik-Zylindern oder Hydraulikzylindern oder einem einzelnen Ringzylinder als Aktuator 32 denkbar, wenngleich weitaus schwerer, teurer und durch verschleiß- oder korrosionsempfindliche Oberflächen und Dichtungen zwischen den Kolben- und Zylinderlaufflächen weniger betriebssicher.

Das Druckmittel wird vorzugsweise über Schläuche oder Leitungen 60 und eine erfindungsgemäße Drehdurchführung 62 mit Drehdichtungen 64 durch die Schwenklagerung 3 in die Gondel und in den Aktuator 32 eingespeist.

Dabei kann die Druckmitteleinspeisung in den Aktuator 32 mittels eines, durch Fliehkraftgewichte von einer drehbaren Welle aktivierbaren Ventils oder über einen Fliehkraft betätigbaren Schalter eines elektrisch gesteuerten Ventils erfolgen. Hierdurch wird eine selbsttätige Überdrehzahl- Schutzfunktion erzielt, die unabhängig von der Funktionsweise einer zur Kontrolle des Bremssystems 18 vorgesehenen Steuerung arbeitet.

Anders als oben beschrieben, kann der Aktuator 32 oder das gesamte Bremssystem 18 auch auf der dem Rotor 4 gegenüberliegenden Seite der Getriebe/Generator-Anordnung 10, 14 positioniert sein. Er kann dann ringförmig oder zylindrisch ausgebildet sein.

Die Strukturelemente 40 und 44 des Bremssattels 22 und des Schubmittels 28 können direkt als Bremsbelagsträger ausgebildet sein, wobei die Bremsbeläge 24, 26 auf die Flächen aufgeklebt sein können. Alternativ ist es möglich, dass die Bremsbeläge 24, 26 mit eigenen Bremsbelagsträgem verbunden sind, sodass ein formschlüssig oder schraubbar befestigtbarer Bremsklotz entsteht, der im Verschleißfalle auswechselbar ist.

Unwuchtige Vereisung des Rotors 4 oder Schäden an den Rotorblättern 8 können zu einer untypischen Schwingungsbelastung der Windkraftanlage führen. Für diesen Fall ist ein Unwuchtsensor vorgesehen, der mittels der Steuereinrichtung oder mittels eines Ventils das Bremssystem 18 aktiviert.

Alternativ zu dem beschriebenen Scheiben-Bremssystem kann auch eine Trommelbremse mit auf der Rotorwelle 4 und/oder der horizontalen und/oder vertikalen Welle 12, 15 montierter Trommel vorgesehen sein. In diesem Falle ist ein in der Trommel liegendes Spannmittel vorgesehen, das z.B. durch eine axiale oder radial nach innen oder außen gerichtete Stellbewegung eines elastischen Aktuators die erforderlichen Stellkräfte aufbringt.

Die Gondel der Windkraftanlage wird durch die erfindungsgemäße kompakte Bremsanlage 18 mit der innenliegenden Rotorlagerung 16 und einem direkt getriebenen Generator 14 oder einem Planetenradgetriebe zzgl. Generator oder einem Winkelgetriebe zu einer kompakten, zuverlässigen, weil sicher bremsbaren, integralen Einheit.

### Bezugszeichenliste

- 1: Windkraftanlage
- 2: Mast
- 3: Schwenklager
- 4: Rotor
- 5: Rotorflansch
- 6: Rotorwelle
- 7: Nabe
- 8: Rotorblätter
- 10: Getriebe
- 12: horizontale Welle
- 14: Verbraucher
- 15: vertikale Welle
- 16: Rotorlagerung
- 18: Bremssystem
- 20: Bremsscheibe
- 22: Bremssattel
- 24, 26: Bremsbeläge
- 28: zweite Baugruppe (Schubmittel)
- 29: Formschluss
- 30: Vorspannmittel
- 32: Hydraulik-Aktuator
- 34: Strukturelement
- 34, 26: Bremsbeläge
- 38, 40: Strukturelemente des Bremssattels
- 42, 44: Strukturelemente des Schubmittels
- 50: ringförmiger Raum
- 51: im ringförmigen Raum angeordnetes Bauteil
- 54, 56: formschlüssige Geometrien
- 60: Leitungen

- 62: Drehdurchführung
- 64: Drehdichtungen

## Patentansprüche

1. Windkraftanlage (WKA) mit einem Mast (2), einem drehbar in einer Rotarlagerung (16) gelagerten Rotor (4), einer der Windrichtung nachführbaren, schwenkbar gelagerten Gondel und einem auf der Rotorwelle (6) oder auf einer anderen vom Rotor angetriebenen Welle (12, 15) angeordneten, Bremsbeläge (24, 26) enthaltenden, von einem Vorspannkraft ausübenden Spannmittel (30) vorgespannten, mit einer Bremsscheibe (20) oder einer Bremstrommel ausgerüsteten Bremssystem (18), **dadurch gekennzeichnet, dass** wenigstens ein fluidisch beaufschlagbarer Aktuator (32) zur Kompensation der Vorspannkraft und zur Entspannung und Freigabe des Bremssystems (18) vorgesehen ist, der die Rotorwelle (6) oder die andere vom Rotor (4) angetriebene Welle (12, 15) ringförmig umgibt und axial oder rotationssymmetrisch zur Rotorwelle (6) oder zu der anderen Welle (12, 15) angeordnet ist.

2. Windkraftanlage nach Anspruch 1, **dadurch gekennzeichnet, dass** als Aktuator (32) ein axial zur entsprechenden Welle (6,12,15) angeordneter, pneumatisch oder fluidisch dichter, elastischer, die Welle (6, 12, 15) ringförmig umgebender Schlauch oder Reifen mit Schlauch oder schlauchloser, sich auf einer entsprechenden Felge selbst abdichtender Reifen vorgesehen ist.

3. Windkraftanlage nach Anspruch 1, **dadurch gekennzeichnet, dass** als ringförmiger Aktuator (32) ein Zylinder mit einem ringförmigen Kolben und einem zylindrischen Innenteil mit einer zentrischen Durchgangsbohrung, in welcher die entsprechende Welle läuft, axial zur entsprechenden Welle angeordnet ist, oder als eine Gruppe von ringförmig angeordneten Pneumatikzylindern oder ringförmig angeordneten, elastisch verformbaren Pneumatikelementen in rotationssymmetrischer Anordnung zur entsprechenden Welle vorgesehen ist.

4. Windkraftanlage Anspruch 1, 2 oder 3, **dadurch gekennzeichnet, dass** als Spannmittel (30) zur Erzeugung der Vorspannkraft eine ringförmig und axial um die entsprechende Welle angeordnete Gruppe von Druckfedern (30) oder einzelne oder mehrere direkt axial um die entsprechende Welle angeordnete/n Feder/n vorgesehen ist/sind.

5. Windkraftanlage nach einem der vorhergehenden Ansprüche, **dadurch gekennzeichnet, dass** ein Bremssattel (22) vorgesehen ist, der die Bremsscheibe (20) und das die Vorspannkraft erzeugende Spannmittel (30) weitgehend umschließt, wobei der Bremssattel (22) im Wesentlichen aus zwei plattenförmigen Blech-Struktur-Elementen (38, 40) gebildet ist, die durch Verbindungselemente miteinander verbunden sind.

6. Windkraftanlage nach einem der vorhergehenden Ansprüche, **dadurch gekennzeichnet, dass** das Bremsmoment des Bremssysterns (18) über eine formschlüssige, axial zur Welle verschiebbare Verbindung (29) des Bremssattels (22) gegenüber der die Rotorlagerung (16) aufnehmenden Baugruppe oder anderen Bauteilen oder Baugruppen der Gondel abgestützt ist.

7. Windkraftanlage nach einem der vorhergehenden Ansprüche, **dadurch gekennzeichnet, dass** sich der ringförmige Aktuator (32) in einem Schubmittel (28) befindet, das teilweise durch entsprechende Öffnungen in den Bremssattel hineingreift.

8. Windkraftanlage nach einem der vorhergehenden Ansprüche, **dadurch gekennzeichnet, dass** das Schubmittel (28) im Wesentlichen aus zwei plattenförmigen Blech-Strukturelementen (42, 44) gebildet wird, die durch Verbindungselemente miteinander verbunden sind, über welche die das Bremssystem (18) entspannenden Kräfte ausgeübt werden.

9. Windkraftanlage nach Anspruch 9 oder 11, **dadurch gekennzeichnet, dass** die Verbindungselemente Schrauben, Bolzen oder Distanzstücke sind.

10. Windkraftanlage nach einem der vorhergehenden Ansprüche, **dadurch gekennzeichnet, dass** der Formschluss des Bremssattels (22) und des Schubmittels (28) gegenüber der Rotorlagerung (16) oder anderen Bauteilen der Gondel mittels innen in die plattenförmigen Strukturelemente (38, 42, 44) integrierten, formschlüssigen Geometrien (54, 56) hergestellt ist.

11. Windkraftanlage nach einem der vorhergehenden Ansprüche, **dadurch gekennzeichnet, dass** je eines der plattenförmigen Strukturelemente (38, 40, 42, 44) des Bremssattels (22) und des Schubmittels (28) als Bremsbelagsträger ausgebildet ist.

12. Windkraftanlage nach einem der vorhergehenden Ansprüche, **dadurch gekennzeichnet, dass** die Freigabe des Bremssystems durch den Fluiddruck mittels einer drehzahlüberwachenden elektrischen Steuereinrichtung gesteuert wird.

13. Windkraftanlage nach Anspruch 20, **dadurch gekennzeichnet, dass** ein von der elektrischen Steuereinrichtung unabhängiger, durch Fliehkraftgewichte ausgelöster Not-Abschaltmechanismus vorgesehen ist, der beim Erreichen kritischer Drehzahlen das elektrisch betätigte Ventil oder ein zweites mechanisch betätigtes Ventil deaktiviert, sodass der das Bremssystem (18) freigebende Druck abfällt und das Bremssystem über das Vorspannmittel (30) blockiert.

14. Wndkraftanlage nach einem der vorhergehenden Ansprüche, **dadurch gekennzeichnet, dass** das Bremssystem (18) zusammen mit der Rotorlagerung (16) und einem Getriebe (10) und/oder einem Generator (14) zu einer kompakten, integralen Baugruppe zusammengefasst ist.

15. Windkraftanlage nach einem der vorhergehenden Ansprüche, **dadurch gekennzeichnet, dass** der Fluiddruck Pneumatikdruck ist.
